# EUROPÄISCHE PATENTSCHRIFT

(11) **EP 1 424 281 B1**
(45) Veröffentlichungstag und Bekanntmachung des Hinweises auf die Patenterteilung: **04.01.2006**
(21) Anmeldenummer: 03020649.4
(22) Anmeldetag: 11.09.2003
(51) Int. Cl.: B64D 7/00

(54) **Vorrichtung zum Ankoppeln eines Flugkörpers an ein Flugzeug**
Missile attachment system for an aircraft
Dispositif pour le montage d'un missile sur un aéronef

(30) Priorität: 26.11.2002 DE 10254974
(43) Veröffentlichungstag der Anmeldung: 02.06.2004
(73) Patentinhaber: Bayern-Chemie Gesellschaft für flugchemische Antriebe mbH, 84544 Aschau a. Inn (DE)
(72) Erfinder: Engel, Herbert, 83052 Bruckmühl (DE)
(74) Vertreter: Berngruber, Otto

(56) Entgegenhaltungen:
- US-A- 3 827 332
- US-A- 5 476 238
- US-A- 5 970 842
- US-A1- 2002 088 902

## Beschreibung

Die Erfindung bezieht sich auf eine Vorrichtung zum Ankoppeln eines Flugkörpers mit wenigstens einer Hängeeinrichtung am Flugkörper-Gehäusemantel an ein Flugzeug nach dem Oberbegriff des Anspruchs 1.

Derartige Vorrichtungen werden insbesondere zum Ankoppeln von Flugkörpern (hier auch mit Staustrahlraketentriebwerken) an bemannte oder unbemannte Flugzeuge verwendet. Als Hängeeinrichtungen werden dabei im allgemeinen Lasthaken verwendet, und zwar im allgemeinen zwei mit ihren Spitzen zu oder voneinander weg gerichtete Lasthaken.

Flugkörper mit Staustrahltriebwerken zeichnen sich einerseits durch einen dünnwandigen Gehäusemantel und andererseits durch beschleunigungsbedingte Lasten an der Struktur (Gewicht unter 200 kg) von mehreren Tonnen aus. Durch die Beschleunigung des Flugzeuges in allen Richtungen sind die Lasthaken einer extrem hohen Belastung ausgesetzt. Um die Lasthaken mit der erforderlichen Festigkeit mit dem dünnwandigen Gehäusemantel zu verbinden, werden die Lasthaken und der Gehäusemantel einstückig ausgebildet. Ein Anmontieren oder Anschweißen des Lasthakens ist nicht mehr möglich. Damit die Lasthaken und der Gehäusemantel eine Bauteileinheit bilden, also einstückig ausgebildet sind, werden die Lasthaken aus einem entsprechenden dickwandigen Rohr herausgearbeitet. Aufgrund der hohen Last können an den Lasthaken insbesondere im Bereich der Spitzen Ermüdungsbrüche auftreten. Dies hat eine erhebliche Einschränkung der Einsatzdauer solcher Flugkörper zur Folge.

Aus US-A-2002/0088902 ist eine Vorrichtung nach dem Oberbegriff des Anspruchs 1 bereits bekannt. Das Hohllprofil ist dabei in einer Adapterplatte vorgesehen, die an den Gehäusemantel angeschraubt wird. Das Hohlprofil in der Adapterplatte erstreckt sich in Flugkörperlängsrichtung. Aus US-A-5 970 842 ist eine Vorrichtung zum Ankoppeln eines Flugkörpers an ein Flugzeug bekannt, bei der die Hängeeinrichtung mit Schrauben in einer sich in Flugkörperlängsrichtung erstreckenden Nut befestigt ist. Aus US-A-3 827 332 ist die Befestigung eines Flugkörpers über eine Schwalbenschwanzverbindung an einem Flugzeug bekannt.

Aufgabe der Erfindung ist es, die Einsatzdauer dieser Flugkörper deutlich zu steigern.

Dies wird erfindungsgemäß durch die im Anspruch 1 gekennzeichnete Vorrichtung erreicht. In den Unteransprüchen sind vorteilhafte Ausgestaltungen der Erfindung wiedergegeben.

Nach der Erfindung wird die Hängeeinrichtung durch ein Formteil gebildet. Das Fügen der Hängeeinrichtung und des Gehäusemantels erfolgt dadurch, dass das Formteil oder der Gehäusemantel ein vorspringendes Profil aufweist, das in ein Hohlprofil am Gehäusemantel bzw. Formteil formschlüssig eingreift. Das vorspringende Profil bzw. das Hohlprofil verlaufen quer zur Flugrichtung, also zur Flugkörperlängsachse.

Da die Hängeeinrichtung ein separates Formteil bildet, kann sie, wenn sie gegenüber dem Flugkörper eine geringere Standzeit hat, erfindungsgemäß ausgetauscht werden. Damit kann die Einsatzdauer des Flugkörpers wesentlich gesteigert werden. Da der Werkstoff für das die Hängeeinrichtung bildende Formteil unabhängig von dem Werkstoff für den Gehäusemantel gewählt werden kann, kann der Werkstoff für das Formteil auch optimiert und dadurch die Zeitstandfestigkeit der Hängeeinrichtung erhöht werden, und zwar in der Praxis um mehr als das Doppelte gegenüber den bekannten einstückig mit dem Gehäusemantel ausgebildeten Hängeeinrichtungen.

Das vorspringende Profil oder Hohlprofil, mit dem der Gehäusemantel erfindungsgemäß versehen ist, ist einstückig mit dem Gehäusemantel ausgebildet. Dazu ist das Profil bzw. Hohlprofil aus einer zumindest im Bereich der Hängeeinrichtung dickwandigen oder in anderer Weise mit einer Materialanhäufung versehenen Rohrstruktur herausgearbeitet.

Wenn ein Hohlprofil herausgearbeitet wird, kann der Gehäusemantel an dem Bereich der Hängeeinrichtung mit einem massiven Segment oder dergleichen Materialanhäufung versehen sein. In das Segment oder die entsprechende Materialanhäufung des Gehäusemantels kann eine Nut eingearbeitet sein, die sich entlang einer Sehne des rohrförmigen Gehäusemantels quer zur Flugkörperlängsachse erstreckt.

Die quer verlaufende Nut kann als T-Nut ausgebildet sein. Die Hängeeinrichtung kann dann an ihrer Basis mit einem T-Profil versehen sein, das in die T-Nut schiebbar ist. Die T-Nut kann an beiden Enden oder nur an einem Ende offen ausgebildet sein, um das T-Profil von der Seite einzuschieben.

Die Hängeeinrichtung wird damit hochlasttragend in den Gehäusemantel eingebettet.

Ferner ist es möglich zur Bildung einer Bajonettverschlussverbindung an der Basis der Hängeeinrichtung ein Profil mit zwei in entgegengesetzte Richtung weisenden Nasen vorzusehen, sodass die Hängeeinrichtung mit den entlang der T-Nut ausgerichteten Nasen in die T-Nut in dem Gehäusemantel steckbar ist, worauf durch Verdrehen der Hängeeinrichtung um ihre Längsachse die beiden Nasen in die beiden Enden des Querbalkens der T-Nut eingreifen.

Um die in die T-Nut eingeschobene oder mittels der Bäjonettverschlussverbindung formschlüssigen in die T-Nut eingreifende Hängeeinrichtung zu fixieren, kann wenigstens ein Bolzen vorgesehen sein, der die Hängeeinrichtung durchsetzt und in den Gehäusemantel im Bereich der Nut eingreift.

Die Hängeeinrichtung kann zwei Lasthaken aufweisen, die mit ihren Spitzen in entgegengesetzte Richtung gerichtet sein können. Der Bolzen kann dann die Hängeeinrichtung zwischen den beiden Lasthaken durchsetzen.

Statt in einem Segment oder dergleichen Materialanhäufung in dem rohrförmigen Gehäusemantel kann das Hohlprofil auch an einem Vorsprung an der Außenseite des Gehäusemantels vorgesehen sein. Ferner kann an der Außenseite des Gehäusemantels ein vorspringendes Profil vorgesehen sein, das in ein Hohlprofil an der Hängeeinrichtung formschlüssig eingreift. Das Hohlprofil in dem Vorsprung oder das vorspringende Profil an der Außenseite des Gehäusemantels kann durch Herausarbeiten aus einer zumindest in diesem Bereich entsprechend dicken Rohrstruktur gebildet sein.

Das vorspringende Profil an der Außenseite des Gehäusemantels kann also Schwalbenschwanzprofil ausgebildet sein. Das Hohlprofil in dem Vorsprung an der Außenseite des Gehäusemantels kann beispielsweise eine T-Nut sein, in das ein T-Profil an der Hängeeinrichtung formschlüssig eingreift.

Durch die T-förmige Nut an der Außenseite des Gehäusemantels werden also im Querschnitt zwei Klauen gebildet, die die Enden des waagrechten Balken des T-Profils an der Hängeeinrichtung übergreifen.

Dabei können an dem Gehäusemantel zwei mit jeweils einem Lasthaken versehene Hängeeinrichtungen vorgesehen sein, wobei die Lasthaken mit ihren Spitzen aufeinander zu gerichtet sein können.

Um die auf das Profil oder in das Hohlprofil an der Außenseite des Gehäusemantels geschobene Hängeeinrichtung zu fixieren, kann ein Bolzen vorgesehen sein, der den Vorsprung mit dem Hohlprofil an der Außenseite des Gehäusemantels und das in dieses Hohlprofil geschobene Profil an der Hängeeinrichtung bzw. die auf das Profil an dem Gehäusemantel geschobene Basis der Hängeeinrichtung untersetzt. Der Bolzen kann durch einen Querstift gesichert sein.

Da die an den Hängeeinrichtungen wirkenden Lasten in Richtung Gehäusemantel als Punktlasten aufzufassen sind, ist der Gehäusemantel zu den Hängeeinrichtungen hin vorzugsweise aufgedickt. Dazu kann die Innenwand des Gehäusemantels zur Außenwand exzentrisch angeordnet sein.

Nachstehend ist die Erfindung anhand der beigefügten Zeichnung beispielhaft näher erläutert. Darin zeigen:
Figur 1 einen Längsschnitt durch einen Flugkörper-Gehäusemantel mit zwei Hängeeinrichtungen nach einer ersten und einer zweiten Ausführungsform;
Figur 2 und 3 einen Querschnitt durch den Gehäusemantel mit der Hängeeinrichtung nach der ersten bzw. zweiten Ausführungsform; und
Figur 4 und 5 einen Querschnitt durch einen Teil des Gehäusemantels und die Basis der Hängeeinrichtung mit einer Schwalbenschwanzverbindung zwischen Gehäusemantel und Hängeeinrichtung bzw. einem in eine T-Nut an dem Gehäusemantel eingreifendes T-Profil an der Hängeeinrichtung.

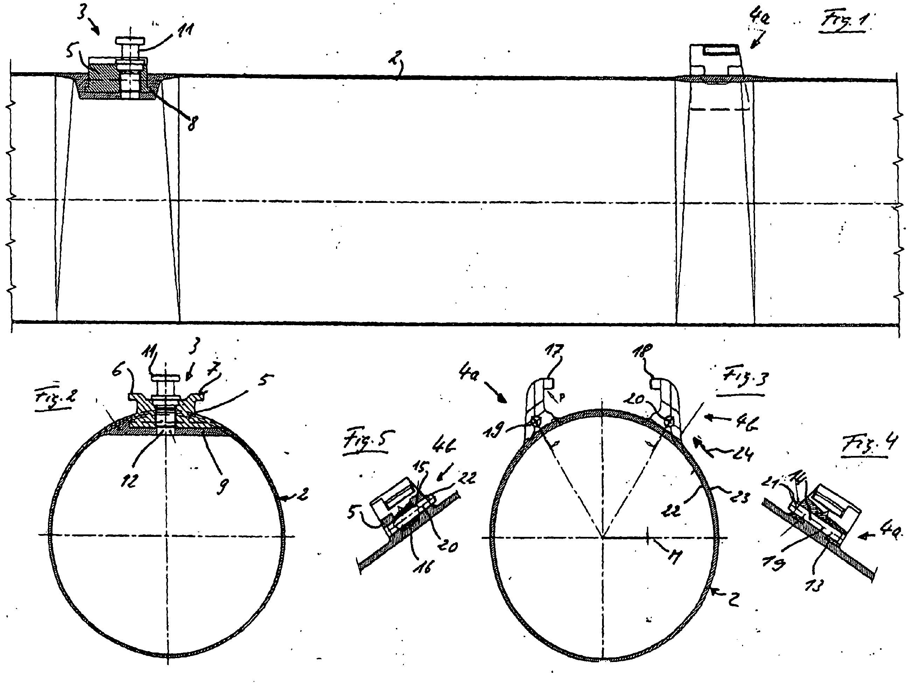

Gemäß Figur 1 bis 3 weist der Flugkörper 1 einen zylindrischen Gehäusemantel 2 auf, an dem Hängeeinrichtungen 3, 4a und 4b befestigt sind, die jeweils aus einem Formteil bestehen.

Die Hängeeinrichtung 3 nach Figur 1 und 2 besteht aus einer Basis 5 mit einem T-Profil und zwei in entgegengesetzte Richtung weisenden Lasthaken 6, 7. Gemäß Figur 1 weist der Gehäusemantel 2 eine T-förmige Nut 8 in einem Segment 9 des zylindrischen Gehäusemantels 2 auf. Die Nut 8 verläuft quer zur Längsrichtung des Flugkörpers und parallel zu einer das Segment 9 bildenden Sehne. Um die Hängeeinrichtung 3 mit der Basis 5 mit dem Hängeprofil von der Seite in die Nut 8 schieben zu können, ist die Nut 8 an einer Seite offen. Das Profil 5 greift damit formschlüssig in die T-Nut 8 ein.

Um die eingeschobene Hängeeinrichtung 3 in der T-Nut 8 zu fixieren, ist eine Bolzenschraube 11 vorgesehen, die in ein Gewinde in der Basis 5 der Hängeeinrichtung eingeschraubt ist und mit einer zylindrischen Andrehung 12 in eine Bohrung in dem Segment 9 eingreift.

Die an der Hängeeinrichtung 3 wirkenden Lasten (in verschiedenen Richtungen) werden dadurch über die formschlüssige Verbindung aus T-Nut 8 und darin formschlüssig eingreifendem T-Profil 5 und den Bolzenansatz 12 in dem Gehäusemantel 2 eingeleitet.

Bei der Ausführungsform nach Figur 3 bis 5 ist zur Befestigung der Hängeeinrichtung für 4a bzw. für 4b ein Vorsprung an der Außenseite des Gehäusemantels 2 vorgesehen.

Gemäß Figur 4 ist der Vorsprung als Schwalbenschwanzprofil 13 ausgebildet und die Basis 5 der Hängeeinrichtung 4a mit einer entsprechenden schwalbenschanzförmigen Nut 14 versehen, in die das Schwalbenschwanzprofil 13 formschlüssig eingreift.

Demgegenüber weist nach Figur 5 der Vorsprung an der Außenseite des Gehäusemantels 2 eine T-Nut 15 auf, in die ein T-Profil 16 an der Basis 5 der Hängeeinrichtung 4b geschoben ist, sodass die Basis 5 der Hängeeinrichtung 4b formschlüssig in die T-Nut 15 an der Außenseite des Gehäusemantels 2 eingreift. Die T-Nut 15 bildet im Querschnitt also zwei Klauen, die die beiden Enden des waagrechten Balkens des T-Profils 16 an der Hängeeinrichtung 4b übergreifen. Die Hängeeinrichtungen 4a, 4b werden dabei entsprechend dem Pfeil 24 quer zur Flugkörperlängsachse eingeschoben.

Gemäß Figur 3 sind an dem Gehäusemantel 2 die zwei Hängeeinrichtungen 4a, 4b mit jeweils einem Lasthaken 17, 18 versehen, wobei die beiden Lasthaken 17, 18 mit ihren Spitzen aufeinander zu gerichtet sind.

Um die auf das Schwalbenschwanzprofil 13 bzw. in die T-Nut 15 geschobene Hängeeinrichtung 4a bzw. 4b zu fixieren, ist ein Bolzen 19, 20 vorgesehen, der in Flugkörperlängsrichtung verläuft, die Basis 5 der Hängeeinrichtung 4a durchsetzt und in das Schwalbenschwanzprofil 13 eingreift bzw. den Vorsprung 10 an der Außenseite des Gehäusemantels 2 sowie das T-Profil 16 an der Hängeeinrichtung 4b durchsetzt. Die Bolzen 19, 20 können durch ein Drahtstift 21, 22 in ihrer Lage fixiert sein. Da die Last in Richtung des Pfeiles P auf den Lasthaken 18 wirkt, wird sie überwiegend über die Flanke der T-Nut 15 in den Gehäusemantel 2 eingeleitet. Bei der Hängeeinrichtung 4b ist vorteilhaft, dass der gesamte Umfang des Bolzens 20 vom Material der Basis 5 umgeben ist.

Da die an den Hängeeinrichtungen 4a, 4b wirkenden Lasten in Richtung des Gehäusemantels 2 Punktlasten darstellen, ist der Gehäusemantel 2 zu den Hängeeinrichtungen 4a, 4b aufgedickt, d. h. die Außenwand 23 des Gehäusemantels 2 ist zu seiner Innenwand 22 exzentrisch durch den Mittenversatz M versetzt.

## Patentansprüche

1. Vorrichtung zum Ankoppeln eines Flugkörpers mit wenigstens einer durch ein Formteil gebildeten Hängeeinrichtung (3, 4a, 4b) am Flugkörper-Gehäusemantel (2) an ein Flugzeug, wobei zur Befestigung des Formteils an dem Gehäusemantel (2) am Formteil oder am Gehäusemantel (2) ein vorspringendes Profil vorgesehen ist, das in ein am Gehäusemantel (2) bzw. Formteil vorgesehenes Hohlprofil lasttragend formschlüssig eingreift, wobei die Hängeeinrichtung einen Lasthaken (6, 7, 17, 18) aufweist, **dadurch gekennzeichnet, dass** das Profil oder Hohlprofil am Gehäusemantel (2) durch Herausarbeiten aus einer Materialanhäufung an dem Gehäusemantel (2) einstückig mit dem Gehäusemantel (2) ausgebildet ist, wobei das Hohlprofil durch eine quer zur Flugkörperlängsachse verlaufende Nut gebildet ist, in das die Hängeeinrichtung (4b) quer zur Flugkörperlängsachse eingeschoben ist.

2. Vorrichtung nach Anspruch 1, **dadurch gekennzeichnet, dass** die Nut durch eine T-Nut (8) gebildet wird und das vorspringende Profil durch die Basis (5) der Hängeeinrichtung (3).

3. Vorrichtung nach Anspruch 2, **dadurch gekennzeichnet, dass** die T-Nut (8) in den Gehäusemantel (2) eingearbeitet ist.

4. Vorrichtung nach Anspruch 2, **dadurch gekennzeichnet, dass** die T-Nut (8) auf der Außenseite des Gehäusemantels (2) herausgearbeitet ist.

5. Vorrichtung nach Anspruch 2, **dadurch gekennzeichnet, dass** die Basis (5) in die T-Nut (8) schiebbar ist.

6. Vorrichtung nach Anspruch 2, **dadurch gekennzeichnet, dass** die Basis ein in die T-Nut steckbares vorspringendes Profil mit zwei Nasen aufweist, die nach Art eines Bajonettverschlusses durch Drehung in die Enden des Querbalkens der T-förmigen Nut eingreifen.

7. Vorrichtung nach Anspruch 1, **dadurch gekennzeichnet, dass** zur Erhöhung der Wandstärke des Gehäusemantels (2) im Bereich der Hängeeinrichtung (4a, 4b) die Innenwand (22) des Gehäusemantels zur Außenwand (23) exzentrisch angeordnet ist.

8. Vorrichtung nach Anspruch 1, **dadurch gekennzeichnet, dass** das Profil durch ein Schwalbenschwanzprofil (13) gebildet wird.

9. Vorrichtung nach einem der vorstehenden Ansprüche, **dadurch gekennzeichnet, dass** zur Fixierung der in das Hohlprofil eingreifenden Hängeeinrichtung (3, 4a, 4b) ein Bolzen (11, 19, 20) vorgesehen ist.

10. Vorrichtung nach einem der vorstehenden Ansprüche, **dadurch gekennzeichnet, dass** das die Hängeeinrichtung (3, 4a, 4b) bildende Formteil aus einem anderen Werkstoff als der Gehäusemantel (2) besteht.

## Claims

1. An apparatus for coupling to an aircraft a missile having at least one suspension device (3, 4a, 4b) formed by a molding on the missile casing (2), the molding or the casing (2) having provided thereon, for fastening the molding to the casing (2), a projecting section which engages in load-bearing and form-fitting fashion a hollow section on the casing (2) or molding, as the case may be, the suspension device having a load hook (6, 7, 17, 18), **characterized in that** the section or hollow section on the casing (2) is formed integrally with the casing (2) by being worked from an accumulation of material on the casing (2), the hollow section being formed by a slot extending transversely to the longitudinal axis of the missile and into which the suspension device (4b) is inserted transversely to the longitudinal axis of the missile.

2. An apparatus according to claim 1, **characterized in that** the slot is formed by a T-slot (8) and the projecting section by the base (5) of the suspension device (3).

3. An apparatus according to claim 2, **characterized in that** the T-slot (8) is worked into the casing (2).

4. An apparatus according to claim 2, **characterized in that** the T-slot (8) is worked from the outer side of the casing (2).

5. An apparatus according to claim 2, **characterized in that** the base (5) is insertable into the T-slot (8).

6. An apparatus according to claim 2, **characterized in that** the base has a projecting section to be inserted into the T-slot and having two noses which engage the ends of the crossbar of the T-shaped slot by rotation in the manner of a bayonet lock.

7. An apparatus according to claim 1, **characterized in that** the inside wall (22) of the casing is disposed eccentrically to the outer wall (23) to increase the wall thickness of the casing (2) in the area of the suspension device (4a, 4b).

8. An apparatus according to claim 1, **characterized in that** the section is formed by a dovetail section (13).

9. An apparatus according to any of the above claims, **characterized in that** a bolt (11, 19, 20) is provided for fixing the suspension device (3, 4a, 4b) engaging the hollow section.

10. An apparatus according to any of the above claims, **characterized in that** the molding forming the suspension device (3, 4a, 4b) is made of a different material from the casing (2).

## Revendications

1. Dispositif d'accouplement d'un missile à un avion, comportant au moins un dispositif de suspension (3, 4a, 4b) formé par une pièce façonnée sur l'enveloppe de boîtier (2), un profil en saillie étant prévu sur la pièce façonnée ou sur l'enveloppe de boîtier (2) pour fixer la pièce façonnée sur l'enveloppe de boîtier (2), profil qui s'engage avec support de charge et par coopération de formes dans un profil creux prévu sur l'enveloppe de boîtier (2) ou sur la pièce façonnée, le dispositif de suspension présentant un crochet de charge (6, 7, 17, 18), **caractérisé en ce que** le profil ou le profil creux est réalisé sur l'enveloppe de boîtier (2) d'un seul tenant avec l'enveloppe de boîtier (2) par ébauchage à partir d'une accumulation de matière sur l'enveloppe de boîtier (2), le profil creux étant formé par une gorge s'étendant transversalement à l'axe longitudinal du missile, dans laquelle le dispositif de suspension (4b) est enfilé transversalement à l'axe longitudinal du missile.

2. Dispositif selon la revendication 1, **caractérisé en ce que** la gorge est formée par une gorge en T (8) et le profil en saillie est formé par la base (5) du dispositif de suspension (3).

3. Dispositif selon la revendication 2, **caractérisé en ce que** la gorge en T (8) est incorporée dans l'enveloppe de boîtier (2).

4. Dispositif selon la revendication 2, **caractérisé en ce que** la gorge en T (8) est ébauchée sur la face extérieure de l'enveloppe de boîtier (2).

5. Dispositif selon la revendication 2, **caractérisé en ce que** la base (5) peut être enfilée dans la gorge en T (8).

6. Dispositif selon la revendication 2, **caractérisé en ce que** la base présente un profil en saillie qui peut être enfiché dans la gorge en T (8) avec deux ergots qui s'engagent à la manière d'une fermeture à baïonnette en les faisant tourner dans les extrémités de la traverse de la gorge en forme de T.

7. Dispositif selon la revendication 1, **caractérisé en ce que** pour augmenter l'épaisseur de paroi de l'enveloppe de boîtier (2) dans la région du dispositif de suspension (4a, 4b), la paroi intérieure (22) de l'enveloppe de boîtier est agencée de manière excentrique par rapport à la paroi extérieure (23).

8. Dispositif selon la revendication 1, **caractérisé en ce que** le profil est formé par un profil en queue d'aronde (13).

9. Dispositif selon l'une des revendications précédentes, **caractérisé en ce qu'**il est prévu un boulon (11, 19, 20) pour fixer le dispositif de suspension (3, 4a, 4b) s'engageant dans le profil creux.

10. Dispositif selon l'une des revendications précédentes, **caractérisé en ce que** la pièce façonnée formant le dispositif de suspension (3, 4a, 4b) est constituée par un autre matériau que l'enveloppe de boîtier (2).
